# DEMANDE DE BREVET EUROPEEN

(11) **EP 0 624 425 A1**
(43) Date de publication de la demande: **17.11.1994**
(21) Numéro de dépôt: 94401013.1
(22) Date de dépôt: 06.05.1994
(51) Int. Cl.: B23K 37/053, B23K 15/00

(54) **Equipement interne pour le soudage bout à bout par faisceau d'électrons de deux pièces annulaires et utilisation**

(30) Priorité: 12.05.1993 FR 9305726
(71) Demandeur: FRAMATOME, 92400 Courbevoie (FR)
(72) Inventeur: Boula, Gérard, F-21190 Meursault (DE)
(74) Mandataire: Bouget, Lucien

(57) **Abrégé**

L'équipement interne (4) comporte un anneau métallique (13) dont le diamètre extérieur est sensiblement égal au diamètre intérieur des pièces tubulaires (1, 2) comportant une pluralité de fentes de direction radiale sur une partie de sa largeur délimitant des segments d'anneau adjacents reliés entre eux et un dispositif de maintien et d'appui (14) de l'anneau métallique (13) contre les surfaces internes des pièces annulaires (1, 2) dans leur zone de raccordement (11) comportant une partie centrale (21) de support et une pluralité de bras (22) de longueur réglable ayant une disposition rayonnante autour de la partie centrale (21). L'équipement interne (4) comporte également deux parois (15, 16) délimitant une chambre étanche (8) à l'intérieur des pièces (1, 2).

## Description

L'invention concerne un équipement interne pour le soudage bout à bout par faisceau d'électrons de deux pièces annulaires et notamment de deux viroles de grand diamètre, constituant une partie d'une paroi externe d'un générateur de vapeur d'un réacteur nucléaire à eau sous pression.

Les réacteurs nucléaires à eau sous pression comportent des composants de grandes dimensions tels que des générateurs de vapeur qui présentent une enveloppe externe partiellement cylindrique de grand diamètre et de très grande hauteur, ayant une paroi de moyenne ou forte épaisseur.

Cette enveloppe externe est généralement réalisée par soudage bout à bout de viroles cylindriques entre elles ou de viroles cylindriques sur un rebord d'assemblage annulaire d'une plaque tubulaire ou d'une virole tronconique.

Dans tous les cas, on effectue l'assemblage de deux pièces annulaires disposées dans le prolongement axial l'une de l'autre et rapportées l'une contre l'autre par l'une de leurs extrémités axiales.

Le soudage par faisceau d'électrons permet de réaliser, sans métal d'apport, des joints soudés d'une grande qualité métallurgique, avec des temps d'exécution considérablement réduits par rapport aux techniques habituelles par exemple de soudage à l'arc.

Cependant, l'une des difficultés de mise en oeuvre du soudage bout à bout par faisceau d'électrons des pièces annulaires résulte de la nécessité d'établir un vide relativement poussé autour de la zone de raccordement des pièces sur laquelle on dirige le faisceau d'électrons.

Dans le cas de pièces de dimensions modestes, il est possible de réaliser le soudage à l'intérieur d'une enceinte étanche renfermant le canon à électrons dans laquelle les pièces sont introduites et placées dans leur position d'assemblage avant qu'on ne réalise la fermeture étanche de l'enceinte et sa mise sous vide.

Il est bien évident que dans le cas de composants de très grandes dimensions tels que des générateurs de vapeur, le prix de revient d'installations comportant des enceintes étanches de très grandes dimensions et les frais d'exploitation peuvent devenir prohibitifs.

De ce fait, on envisage de réaliser une mise sous vide d'un volume limité autour de la zone dans laquelle on réalise le soudage par faisceau d'électrons. Cependant, dans le cas du raccordement bout à bout de pièces annulaires ou tubulaires, la réalisation d'enceintes étanches permettant d'entourer la zone de soudage présente certaines difficultés. En particulier, il est nécessaire de disposer de moyens permettant de constituer une enceinte étanche aussi bien à l'extérieur qu'à l'intérieur des pièces annulaires ou tubulaires rapportées l'une contre l'autre suivant leur surface de jonction.

Le soudage par faisceau d'électrons est réalisé par fusion du métal des pièces à souder dans une zone de très faible largeur, suivant la surface de jonction des pièces. Cette fusion est obtenue en déplaçant le faisceau d'électrons qui est dirigé suivant une direction de la surface de jonction des pièces, de manière à balayer toute cette surface. Dans le cas de pièces annulaires ou tubulaires, le canon produisant le faisceau d'électrons est généralement disposé à l'extérieur des pièces et le faisceau est dirigé de l'extérieur vers l'intérieur. Il est nécessaire de disposer un talon de soudage constitué par une pièce ou latte métallique mise en contact avec les surfaces des pièces au niveau de leur jonction, du côté opposé aux surfaces sur lesquelles le faisceau est dirigé en premier. Dans le cas de pièces annulaires ou tubulaires, le talon de soudage doit être placé au contact de la surface intérieure cylindrique des pièces le long de la zone de jonction. Il s'est avéré extrêmement difficile de prévoir et de placer un talon de soudage parfaitement en contact avec la surface intérieure des pièces sur toute leur périphérie interne.

En outre, le talon de soudage qui subit une légère fusion pendant le soudage des pièces par faisceau d'électrons se trouve fixé, après soudage, sur la surface des pièces et sur toute leur périphérie. La séparation du talon de soudage et des pièces soudées peut présenter certaines difficultés du fait que le talon est fixé contre les pièces sur toute sa périphérie par soudage et éventuellement sous l'effet de contraintes s'exerçant entre les pièces et le talon.

On se trouve donc généralement en présence de difficultés aussi bien pour la mise en place du talon à l'intérieur des pièces que pour sa séparation des pièces après soudage.

De plus, la qualité géométrique et métallurgique de l'assemblage réalisé par soudage des deux pièces annulaires ou tubulaires dépend en partie du positionnement des pièces l'une par rapport à l'autre avant l'opération de soudage proprement dite.

Des surfaces de jonction de forme généralement tronconique sont usinées sur chacune des pièces à joindre, ces surfaces étant placées dans des positions superposées avant le soudage.

Dans le cas de pièces de très grands diamètres et plus généralement, dans le cas où le rapport entre le diamètre des pièces et leur épaisseur est très grand, la mise en place des pièces annulaires ou tubulaires dans des positions parfaitement coaxiales peut présenter certaines difficultés si l'on ne prévoit pas de moyen de guidage et de positionnement des pièces pour réaliser une parfaite superposition de leurs surfaces de jonction.

On ne connaissait pas jusqu'ici de dispositif destiné à être disposé à l'intérieur de pièces annulaires ou tubulaires pour effectuer leur raccordement par soudage par faisceau d'électrons qui permette de remplir toutes les fonctions énumérées ci-dessus qui sont nécessaires pour réaliser un soudage par faisceau d'électrons de grande qualité, dans des conditions économiques.

Le but de l'invention est donc de proposer un équipement interne pour le soudage par faisceau d'électrons de deux pièces annulaires disposées dans le prolongement axial l'une de l'autre et rapportées l'une contre l'autre par l'une de leurs extrémités axiales, cet équipement interne permettant de faciliter la mise en place précise des pièces l'une par rapport à l'autre, de placer un talon de soudage en contact avec la surface intérieure des pièces dans leur zone de raccordement et d'assurer le support de parois d'une enceinte sous vide à l'intérieur des pièces.

Dans ce but, l'équipement interne suivant l'invention comporte :
- un anneau métallique dont le diamètre extérieur est sensiblement égal au diamètre intérieur des pièces annulaires, comportant une pluralité de fentes de direction radiale sur une partie de sa largeur délimitant des segments d'anneau adjacents reliés entre eux, et
- un dispositif de maintien et d'appui de l'anneau métallique contre les surfaces internes des pièces annulaires dans leur zone de raccordement comportant une partie centrale de support et une pluralité de bras de longueur réglable ayant une disposition rayonnante autour de la partie centrale, chacun des bras comportant une première extrémité fixée sur la partie centrale, une seconde extrémité portant un support d'anneau en forme de secteur annulaire dont la surface externe présente un rayon sensiblement égal au rayon de la surface interne de l'anneau et entre ses deux extrémités un moyen d'extension et de rétraction du bras.

Afin de bien faire comprendre l'invention, on va maintenant décrire, à titre d'exemple non limitatif, en se référant aux figures jointes en annexe, un mode de réalisation d'un équipement interne suivant l'invention et son utilisation pour le soudage bout à bout par faisceau d'électrons de deux viroles cylindriques.

La figure 1 est une vue en coupe axiale suivant 1-1 de la figure 2, de deux viroles cylindriques en position de soudage par faisceau d'électrons, à l'intérieur desquelles est disposé un équipement interne suivant l'invention.

La figure 2 est une vue de dessus et en coupe suivant 2-2 de la figure 1.

La figure 3 est une vue de dessus d'une partie de l'anneau métallique de l'équipement interne représenté sur la figure 2.

La figure 4 est une vue en coupe suivant 4-4 de la figure 3.

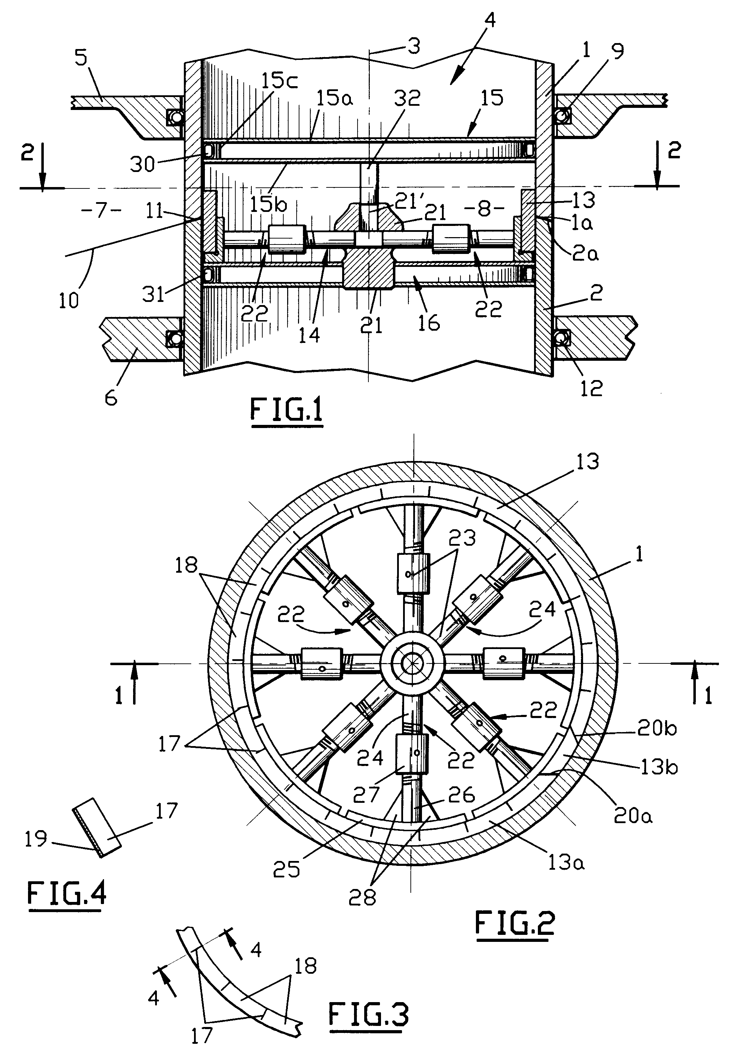

Sur la figure 1, on voit les parties d'extrémité de deux viroles cylindriques 1 et 2 ayant même diamètre et même épaisseur, placées de manière coaxiale et dans le prolongement l'une de l'autre et rapportées l'une sur l'autre par l'intermédiaire de surfaces de raccordement de forme correspondante prévues à leurs extrémités.

Les surfaces de raccordement respectives la et 2a des viroles 1 et 2 sont de forme tronconique et ont pour axe l'axe 3 commun aux viroles 1 et 2.

Les surfaces tronconiques la et 2a rapportées l'une sur l'autre définissent le chanfrein de soudage par faisceau d'électrons qui est donc constitué par une couronne tronconique ayant pour axe l'axe 3 commun aux viroles 1 et 2.

En fait, les surfaces la et 2a sont usinées de manière très précise et avec un très bon état de surface, de sorte que le chanfrein de soudage présente une largeur sensiblement nulle, le soudage étant réalisé par fusion de deux couches minces de métal des viroles, de part et d'autre de leurs surfaces de raccordement.

Pour réaliser le soudage par faisceau d'électrons, on fixe sur les viroles 1 et 2, en contact étanche avec leurs surfaces extérieures, des parois respectives 5 et 6 de forme annulaire délimitant une chambre externe 7 entourant la zone de jonction des viroles 1 et 2 constituée par les surfaces la et 2a rapportées l'une contre l'autre.

On dispose également à l'intérieur des viroles 1 et 2, dans leur zone de raccordement, un équipement interne 4 suivant l'invention, délimitant une chambre interne 8 en regard de la zone de jonction.

Le soudage est réalisé par balayage de la zone tronconique de raccordement entre les viroles 1 et 2, par un faisceau d'électrons 10 dont le tir est dirigé suivant une génératrice de la surface de raccordement tronconique des viroles 1 et 2 constituée par les surfaces 1a et 2a superposées. La direction du faisceau d'électrons 10 est située dans un plan passant par l'axe 3 avec lequel la direction du faisceau 10 fait un angle égal au demi-angle au sommet des surfaces 1a et 2a.

Le balayage circonférentiel de la zone de raccordement des viroles 1 et 2 peut être obtenu en faisant tourner les viroles 1 et 2, simultanément autour de leur axe 3 et en maintenant le canon à électrons produisant le faisceau 10 dans une position et une inclinaison fixe.

Pour cela, l'enceinte externe 7 comporte en plus des parois 5 et 6 rapportées et fixées de manière étanche contre la surface des viroles 1 et 2, par l'intermédiaire de joints toriques gonflables 9 et 12, une paroi complémentaire de fermeture de l'enceinte 7 qui est montée de manière indépendante par rapport aux viroles 1 et 2. Entre les parois 5 et 6 solidaires des viroles 1 et 2 et la paroi complémentaire, sont disposées des joints glissants permettant d'assurer une étanchéité dynamique entre les parois de l'enceinte externe 7, pendant la rotation des viroles 1 et 2.

Le canon à électrons produisant le faisceau 10 est fixé sur une partie de la paroi complémentaire. Un tel dispositif permettant de délimiter une chambre externe étanche 7 autour de la zone de raccordement des viroles 1 et 2 dont on réalise le soudage par faisceau d'électrons est décrit dans une demande de brevet de la Société FRAMATOME déposée le même jour que la présente demande.

Des dispositifs d'évacuation et de mise sous vide tels que des circuits comportant des pompes (non représentés) sont associés aux chambres 7 et 8, de manière à établir un très bon niveau de vide de part et d'autre de la zone de raccordement 11 constituée par superposition des surfaces 1a et 2a des viroles 1 et 2.

On va maintenant décrire, en se référant aux figures 1 à 4, l'équipement interne suivant l'invention désigné de manière générale par le repère 4 et qui est mis en place à l'intérieur des viroles 1 et 2 avant de réaliser l'opération de soudage.

L'équipement 4 comporte un anneau métallique périphérique 13, un dispositif de maintien et d'appui 14 et deux parois 15 et 16 en forme de disque délimitant la chambre à vide 8.

Comme il est visible sur la figure 2, l'anneau métallique 13 est réalisé en deux parties 13a et 13b, la partie 13a étant un anneau incomplet présentant des secteurs successifs séparés par des fentes 17 et la partie 13b, une clé de fixation et de serrage.

Comme il est visible sur les figures 3 et 4, les secteurs d'anneau 18 successifs constituant la partie 13a de l'anneau 13 sont séparés par des fentes 17 de direction radiale réalisées par usinage du métal de la partie 13a en forme d'anneau incomplet, sur une partie de la largeur de l'anneau dans la direction radiale, de manière qu'il subsiste un talon continu 19 en métal de l'anneau sur sa périphérie externe.

Les fentes 17 présentent une largeur suffisante pour assurer une bonne élasticité de la partie 13a de l'anneau.

Les surfaces d'extrémité 20a et 20b de la partie 13a de l'anneau 13 sont planes et inclinées par rapport aux directions radiales de l'anneau, de manière à délimiter un espace qui s'évase en direction de la partie interne de l'anneau 13.

La clé d'assemblage 13b de l'anneau 13 est constituée sous la forme d'un secteur annulaire ayant des surfaces planes d'extrémité inclinées et un angle d'ouverture permettant son introduction à la manière d'un coin entre les surfaces d'extrémité 20a et 20b de la partie 13a de l'anneau 13.

Les faces planes d'extrémité de la clé 13b viennent en appui contre les faces 20a et 20b d'extrémité de la partie 13a de l'anneau 13 et exercent sur ces faces des forces de direction circonférentielle assurant une expansion radiale de la partie 13a de l'anneau dont les secteurs annulaires successifs 18 possèdent une certaine latitude de déplacement les uns par rapport aux autres, due à l'existence de fentes 17 et d'un talon 19 d'épaisseur réduite présentant une bonne flexibilité.

Le dispositif de maintien et d'appui 14 présente une structure rayonnante et comporte une partie centrale 21 ayant sensiblement la forme du moyeu d'une roue.

Sur la partie centrale 21, sont fixés, dans une disposition rayonnante, des bras 22 ayant des axes 23 de direction radiale. Les bras 22 sont répartis de manière régulière autour de la partie centrale 21, de sorte que les axes 23 de deux bras successifs quelconques font un angle constant.

Dans le mode de réalisation représenté sur la figure 2, le dispositif de maintien et d'appui 14 comporte huit bras 22 dont les axes 23 font entre eux des angles de 45°.

Chacun des bras 22 présente une première extrémité interne fixée rigidement sur la partie centrale 21 et une seconde extrémité externe portant un patin 25 en forme de secteur cylindrique constituant un élément de support de l'anneau 13.

Chacun des bras 22 comporte une partie interne 24 constituée par une première tige filetée, une partie externe 26 constituée par une seconde tige filetée et un tendeur de réglage 27 constituant la partie centrale du bras 22. Le tendeur 27 et les tiges filetées peuvent être remplacés par un vérin hydraulique de réglage.

Les filetages des tiges 24 et 26 ont des pas inverses et le tendeur 27 constitué par un écrou comportant deux parties taraudées successives permet le vissage de l'écrou sur les partie filetées des tiges 24 et 26 respectivement.

De cette manière, la longueur du bras 22 peut être réglée en faisant tourner l'écrou 27 dans un sens ou dans l'autre pour obtenir un allongement ou un raccourcissement du bras 22.

La tige filetée 26 est rigidement solidaire du patin d'appui 25 en forme de secteur circulaire par l'intermédiaire de nervures 28.

Les parois 15 et 16 de la chambre à vide 8 sont réalisées de manière sensiblement identique, de sorte qu'on ne décrira que la paroi 15. La paroi 15 est réalisée sous la forme d'une enveloppe cylindrique aplatie comportant deux flasques 15a, 15b identiques en forme de disque et une virole annulaire 15c constituant une entretoise intercalée entre les flasques 15a et 15b et fixée sur ces flasques de manière rigide, par exemple par soudage.

La virole 15c présente un diamètre inférieur au diamètre des flasques 15a et 15b, de sorte qu'il subsiste un espace annulaire à la périphérie de la paroi 15, dans lequel on peut introduire un joint torique 30 gonflable.

La paroi 16 présentant une structure identique à la paroi 15 dans sa partie périphérique comporte un logement dans lequel peut être introduit un joint torique gonflable 31.

La paroi 16 comporte une ouverture centrale dans laquelle est engagée une partie du moyeu 21 qui est fixé de manière rigide sur la paroi 16, par exemple par soudage.

Les patins d'appui 25 des bras 22 comportent une partie ayant une surface externe en forme de secteur cylindrique dont le rayon est sensiblement égal au rayon intérieur de l'anneau 13 et une partie de plus forte épaisseur dans la direction radiale constituant un talon destiné à venir se glisser sous l'anneau 13, lors de la mise en place du dispositif, comme représenté sur la figure 1.

L'anneau 13 présente lui-même un diamètre extérieur sensiblement égal au diamètre intérieur des viroles 1 et 2 dont on réalise le soudage.

On va maintenant décrire les opérations permettant la mise en place de l'équipement interne 4 à l'intérieur de deux viroles 1 et 2 dont on réalise le soudage bout à bout par faisceau d'électrons, préalablement à l'opération de soudage proprement dite.

Dans un premier temps, la partie 13a de l'anneau 13 est engagée à l'intérieur de la partie d'extrémité de la virole 2, de manière que la partie interne de la zone de raccordement 11 soit située au voisinage de la partie centrale de l'anneau 13 suivant son épaisseur dans la direction axiale.

L'engagement de la partie 13a de l'anneau 13 à l'intérieur de la virole 2 est rendu possible du fait que cette partie 13a présente une certaine souplesse du fait de la présence des fentes 17, bien que le diamètre extérieur nominal de l'anneau 17 soit prévu pour ne permettre qu'un engagement à force de cette partie de l'anneau à l'intérieur de la virole 2.

Le coin 13b est engagé dans l'espace libre de la partie 13a de l'anneau et assure le maintien et le plaquage de la surface extérieure de l'anneau 13 contre la surface intérieure de la virole 2.

L'ensemble constitué par le dispositif de maintien et d'appui 14 et la paroi 16 est engagé par l'extrémité de la virole 2 à l'opposé de la surface de raccordement 2a, dans la direction axiale, les bras 22 étant légèrement rétractés vers l'intérieur, de manière à permettre un engagement des patins 25 autour d'une partie de l'anneau 13 engagée à l'intérieur de la virole 2 ; on réalise le serrage du dispositif de maintien 14, par vissage des tendeurs 27 des bras 22, de manière à obtenir une extension de ces bras. Les patins 25 viennent en appui par leur surface externe sur la surface intérieure de l'anneau 13 et permettent d'assurer le maintien de l'anneau 13 et de compléter la mise en appui de la surface extérieure de l'anneau 13 contre la virole 2.

La virole 1 est engagée sur la partie de l'anneau 13 restant saillante à l'extrémité de la virole 2, ce qui permet un centrage et un positionnement parfait des surfaces de raccordement la et 2a des viroles 1 et 2 l'une par rapport à l'autre. La virole 1 est usinée préalablement pour présenter un diamètre intérieur sensiblement égal au diamètre extérieur de l'anneau 13.

Au cours de la mise en place de la virole 1, le centrage et la mise en place de la paroi 15 peuvent être complétés par introduction du pion 32 dans une ouverture 21' de la partie centrale 21 du dispositif d'appui 14.

Il peut être également possible d'engager la virole 1 sur l'anneau 13 après sa mise en place dans la virole 2, et avant son serrage et sa mise en appui par le dispositif 14. Le dispositif 14 est alors mis en place après le positionnement de la virole 1 pour réaliser l'appui de l'anneau 13 simultanément contre les viroles 1 et 2.

Dans tous les cas, le positionnement des viroles 1 et 2 l'une par rapport à l'autre est obtenu sans difficultés d'une manière très précise, même dans le cas de viroles de grand diamètre et de faible épaisseur, du fait de la présence de l'anneau 13 constituant un élément de centrage et de guidage.

De préférence, la virole 2 est fixée sur un dispositif permettant sa mise en rotation autour de son axe 3 pour assurer le balayage circonférentiel lors du soudage.

On effectue le montage des parois délimitant la chambre externe 7.

On assure le gonflage des joints d'étanchéité 9, 12, 30 et 31 et on réalise la mise sous vide des chambres 7 et 8.

Le canon à électrons est alors mis en fonctionnement et les viroles 1 et 2 sont mises en rotation autour de leur axe 3.

Le soudage est réalisé par balayage de la zone de raccordement 11 entre les viroles 1 et 2, délimitée vers l'intérieur par la surface extérieure de l'anneau 13 jouant le rôle de talon ou latte de soudage.

A l'issue de l'opération de soudage, l'équipement interne 4 est démonté et extrait des viroles 1 et 2 raccordées bout à bout. Pour cela, on réalise le démontage de la paroi 15 pour accéder aux tendeurs 27 du dispositif de maintien 14, ces écrous étant manoeuvrés dans le sens de rétraction des bras 22. L'ensemble constitué par le dispositif de maintien 14 et la paroi 16 est alors séparé et extrait de la virole 2.

L'anneau 13 qui a subi une très légère fusion sous l'action du faisceau d'électrons 10 reste fixé par soudage sur la surface intérieure des viroles 1 et 2.

On peut séparer très facilement l'anneau 13 des viroles 1 et 2, en lui faisant subir un choc au niveau de chacun des secteurs successifs 18, par exemple en donnant un coup de marteau dans la direction axiale, au niveau de chacun des secteurs 18, de manière à assurer la rupture du joint soudé à faible résistance entre le secteur et les viroles. On peut ainsi détacher facilement l'anneau métallique 13 des surfaces internes des viroles 1 et 2.

L'utilisation de l'équipement interne 4 suivant l'invention permet de réaliser de manière simple et rapide un positionnement parfait des pièces 1 et 2 dont on effectue le raccordement par soudage par faisceau d'électrons et de mettre en place un talon de soudage en contact avec les pièces dans leur zone de raccordement sur toute leur périphérie interne, ce talon de soudage qui épouse parfaitement la surface interne des pièces pouvant être séparé facilement de ces pièces, après soudage.

En outre, le dispositif suivant l'invention permet de mettre en place de manière simple et efficace des parois d'une enceinte étanche pour mettre sous vide le volume intérieur des pièces au niveau de la zone de raccordement.

Il est bien évident que l'équipement interne suivant l'invention ne se limite pas au mode de réalisation qui a été décrit.

C'est ainsi qu'on peut envisager de réaliser l'anneau métallique et son dispositif de maintien et d'appui sous une forme différente de celle qui a été décrite.

On peut également imaginer d'autres formes de paroi délimitant la chambre étanche interne et d'autres modes opératoires pour la mise en place des parois de la chambre étanche.

Bien que l'utilisation de joints gonflables pour réaliser l'étanchéité entre les parois de la chambre et la paroi interne des pièces présente des avantages importants, du fait que ces joints gonflables peuvent absorber des petits défauts géométriques de la surface interne des pièces à joindre par soudage, il est possible d'imaginer l'utilisation d'autres types de joints.

Il est également possible de prévoir des mécanismes différents de tendeurs engagés sur des tiges filetées pour réaliser l'extension ou la rétraction des bras du dispositif de maintien à structure rayonnante.

On peut par exemple prévoir des bras constitués chacun par un vérin dont le corps est fixé sur la partie centrale du dispositif de maintien et d'appui et dont la tige porte à son extrémité un support d'anneau.

L'invention s'applique non seulement au soudage par faisceau d'électrons de viroles cylindriques de grandes dimensions mais encore au soudage bout à bout par faisceau d'électrons de toutes pièces de forme tubulaire ou annulaire.

## Revendications

**1.-** Equipement interne pour le soudage par faisceau d'électrons de deux pièces annulaires (1, 2) disposées dans le prolongement axial l'une de l'autre et rapportées l'une contre l'autre par l'une de leurs extrémités axiales (1a, 2a), caractérisé par le fait qu'il comporte :
- un anneau métallique (13) dont le diamètre extérieur est sensiblement égal au diamètre intérieur des pièces annulaires (1, 2), comportant une pluralité de fentes (17) de direction radiale sur une partie de sa largeur délimitant des segments d'anneau (18) adjacents reliés entre eux, et
- un dispositif de maintien et d'appui (14) de l'anneau métallique (13) contre les surfaces internes des pièces annulaires (1, 2) dans leur zone de raccordement (11) comportant une partie centrale de support (21) et une pluralité de bras (22) de longueur réglable ayant une disposition rayonnante autour de la partie centrale (21), chacun des bras (22) comportant une première extrémité fixée sur la partie centrale (21), une seconde extrémité portant un support d'anneau (25) en forme de secteur annulaire dont la surface externe présente un rayon sensiblement égal au rayon de la surface interne de l'anneau (13) et entre ses deux extrémités un moyen (27) d'extension et de rétraction du bras.

**2.-** Equipement interne suivant la revendication 1, caractérisé par le fait que l'anneau métallique (13) comporte une première partie (13a) sous la forme d'une pièce annulaire incomplète comportant deux surfaces d'extrémité (20a, 20b) entre lesquelles la pièce annulaire est ouverte et une clé (13b) ayant la forme d'un secteur annulaire correspondant à la forme de la partie ouverte de la pièce annulaire incomplète (13a).

**3.-** Equipement interne suivant la revendication 2, caractérisé par le fait que les surfaces d'extrémité (20a, 20b) de la première pièce (13a) de l'anneau métallique (13) sont inclinées par rapport à des directions radiales de l'anneau de telle sorte que la partie ouverte de la première partie (13a) de l'anneau (13) soit évasée vers l'intérieur de l'anneau (13).

**4.-** Equipement interne suivant l'une quelconque des revendications 1 à 3, caractérisé par le fait que les bras de longueur réglable (22) comportent une première tige filetée (24) fixée sur la partie centrale (21) du dispositif de maintien et d'appui (14), une seconde tige filetée (26) solidaire, à l'une de ses extrémités, d'un support d'anneau (25) et un tendeur (27) constituant le moyen d'extension et de rétraction du bras (22) comportant une ouverture taraudée ayant deux parties de pas inverses dans lesquelles sont vissées les parties filetées de la première tige (24) et de la seconde tige (26) du bras (22) qui présentent également des pas inverses.

**5.-** Equipement interne suivant l'une quelconque des revendications 1 à 3, caractérisé par le fait que les bras de longueur réglable (22) sont constitués chacun par un vérin dont le corps est fixé sur la partie centrale (21) du dispositif de maintien et d'appui et dont la tige porte à son extrémité un support d'anneau (25).

**6.-** Equipement interne suivant l'une quelconque des revendications 1 à 5, caractérisé par le fait que chacun des supports d'anneau (25) est constitué par un patin comportant une première partie dont la surface externe présente la forme d'un secteur cylindrique ayant pour rayon le rayon interne de l'anneau métallique (13) et une seconde partie en saillie vers l'extérieur par rapport à la première partie constituant un talon d'appui de l'anneau métallique (13).

**7.-** Equipement interne suivant l'une quelconque des revendications 1 à 6, caractérisé par le fait qu'il comporte de plus deux parois (15, 16) en forme de disque comportant un logement périphérique annulaire pour un joint d'étanchéité (30, 31) dont le diamètre est sensiblement égal au diamètre intérieur des pièces annulaires (1, 2), l'une de ces parois au moins étant fixée sur la partie centrale (21) du dispositif de maintien et d'appui (14).

**8.-** Equipement interne suivant la revendication 7, caractérisé par le fait que les joints d'étanchéité périphériques des parois (15, 16) de la chambre étanche (8) sont des joints gonflables.

**9.-** Utilisation d'un équipement interne suivant l'une quelconque des revendications 1 à 8, pour le soudage bout à bout de viroles de grand diamètre et notamment de viroles (1, 2) constitutives de la paroi externe d'un générateur de vapeur pour réacteur nucléaire à eau sous pression.
